# EUROPEAN PATENT SPECIFICATION

(11) **EP 3 452 351 B1**
(45) Date of publication and mention of the grant of the patent: **07.07.2021**
(21) Application number: 17792995.7
(22) Date of filing: 19.04.2017
(51) Int. Cl.: G05D 1/00, B60W 30/18

(54) **AUTOMATED VEHICLE OPERATING SYSTEM WITH DRIVING-RULE MODIFICATION BASED ON OBSERVATION OF ANOTHER VEHICLE**
BETRIEBSSYSTEM FÜR AUTOMATISIERTES FAHRZEUG MIT FAHRREGELMODIFIZIERUNG AUF BASIS DER BEOBACHTUNG EINES ANDEREN FAHRZEUGS
SYSTÈME DE FONCTIONNEMENT DE VÉHICULE AUTOMATISÉ À MODIFICATION DE RÈGLES DE CONDUITE SUR LA BASE D'UNE OBSERVATION D'UN AUTRE VÉHICULE

(30) Priority: 04.05.2016 US 201615146534
(43) Date of publication of application: 13.03.2019
(73) Proprietor: Motional AD LLC, Boston, MA 02210 (US)
(72) Inventor: WEI, Junqing, Bridgeville, PA 15017 (US); XU, Wenda, Pittsburgh, PA 15217 (US); SNIDER, Jarrod, M., Pittsburgh, PA 15236 (US); LEE, Jong, Ho, Pittsburgh, PA 15211 (US)
(74) Representative: Fish & Richardson P.C.
(86) International application number: PCT/US2017/028248
(87) International publication number: WO 2017/192261

(56) References cited:
- WO-A1-2014/140107
- JP-A- 2015 044 432
- US-A1- 2006 095 195
- US-A1- 2010 256 836
- US-A1- 2013 184 926
- US-A1- 2013 297 172
- US-A1- 2014 236 414
- US-B1- 8 880 272

## Description

### TECHNICAL FIELD OF INVENTION

This disclosure generally relates to a driving-rule system suitable to operate an automated vehicle, and more particularly relates to a system that operates a host-vehicle in accordance with a driving-rule, detects an observed-deviation of the driving-rule by another-vehicle, and modifies the driving-rule based on the observed-deviation.

### BACKGROUND OF INVENTION

Automated or autonomous vehicle are generally programmed to operate in accordance with, i.e. observe, traffic-laws. Automated vehicles may also be programmed to operate in accordance with driving-rules or guidelines so the automated vehicles behave in a predictable manner. However, in some circumstances strict adherence to these driving-rules may inhibit the general flow of traffic.

US 2014/0236414 describes a computing device configurable to receive sensor information indicative of respective characteristics of vehicles on a road of travel of a first vehicle. The computing device may be configured to identify, based on the respective characteristics, a second vehicle that exhibits an aggressive driving behavior manifested as an unsafe or unlawful driving action. Also, based on the respective characteristics, the computing device may be configured to determine a type of the second vehicle. The computing device may be configured to estimate a distance between the first vehicle and the second vehicle. The computing device may be configured to modify a control strategy of the first vehicle, based on the aggressive driving behavior of the second vehicle, the type of the second vehicle, and the distance between the first vehicle and the second vehicle; and control the first vehicle based on the modified control strategy, comprising, for example maintaining a predetermined safe distance away from the identified vehicle that may be larger than a distance maintained in the default driving behavior.

### SUMMARY OF THE INVENTION

In accordance with one embodiment, a driving-rule system suitable to operate an automated vehicle is provided. The system includes a vehicle-detector and a controller. The vehicle-detector is suitable for use on a host-vehicle. The vehicle-detector is used to detect movement of an other-vehicle proximate to the host-vehicle. The controller is in communication with the vehicle-detector. The controller is configured to operate the host-vehicle in accordance with a driving-rule, detect an observed-deviation of the driving-rule by the other-vehicle, and modify the driving-rule based on the observed-deviation.

Further features and advantages will appear more clearly on a reading of the following detailed description of the preferred embodiment, which is given with reference to the accompanying drawings.

### BRIEF DESCRIPTION OF DRAWINGS

The present invention will now be described, by way of example with reference to the accompanying drawings, in which:
Fig. 1 is a diagram of a driving-rule system in accordance with one embodiment;
Fig. 2 is a traffic scenario encountered by the system of Fig. 1 in accordance with one embodiment; and
Fig. 3 is a traffic scenario encountered by the system of Fig. 1 in accordance with one embodiment.

### DETAILED DESCRIPTION

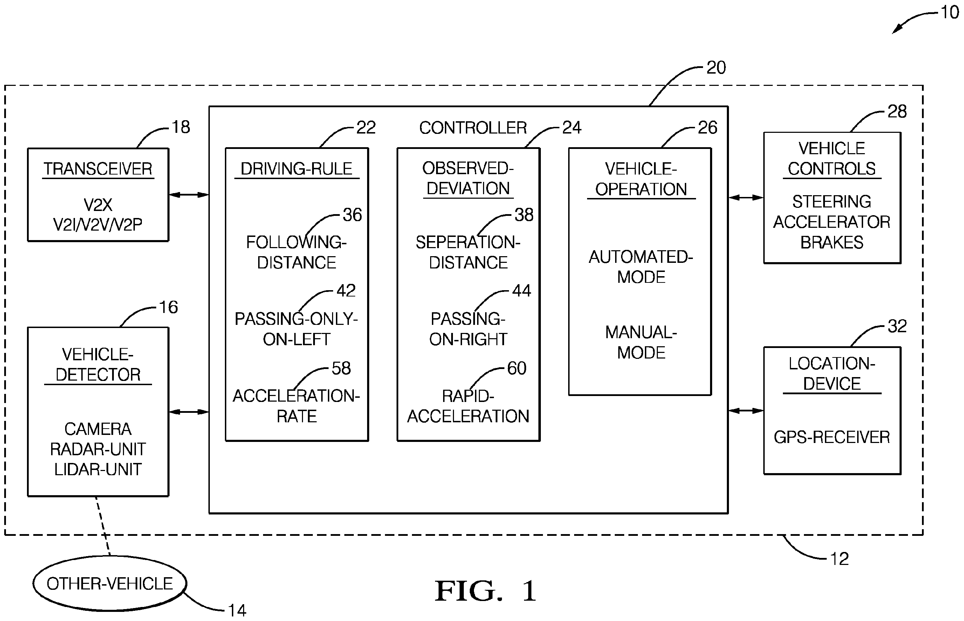

Fig. 1 illustrates a non-limiting example of a driving-rule system 10, hereafter referred to as the system 10. The system 10 is generally suitable to operate an automated vehicle or autonomous vehicle, hereafter referred to as the host-vehicle 12. While the non-limiting examples presented herein are generally related to fully-automated vehicles, i.e. autonomous-vehicles, it is contemplated that the teachings presented herein are also applicable to vehicles that are less than fully-automated, i.e. partially-automated, where an operator (not shown) may manually control some aspect of the host-vehicle 12 such the steering, but the operation of the accelerator and brakes is automated to maintain a predetermined distance behind an other-vehicle 14 forward of the host-vehicle 12.

The system 10 includes a vehicle-detector 16 suitable for use on the host-vehicle 12. By way of example and not limitation, the vehicle-detector 16 may include any one or combination of a camera, a radar-unit, a lidar-unit, an ultrasonic-transducer, or any other sensor technology useful to detect the other-vehicle 14 or objects proximate to the host-vehicle 12. The vehicle-detector 16 is generally used to detect movement of the other-vehicle 14 relative to the host-vehicle 12 and/or any other objects or other vehicles proximate to the host-vehicle 12. The function of the vehicle-detector 16 may also be provided or supplemented by a transceiver 18 configured for vehicle-to-infrastructure (V2I) communications, vehicle-to-vehicle (V2V) communications, and/or vehicle-to-pedestrian (V2P) communications, which may be generically labeled as V2X communications.

The system 10 also includes a controller 20 in communication with the vehicle-detector 16. Signals sent from the vehicle-detector 16 and/or the transceiver 18 may be used to determine the relative speed and/or direction of travel of the other-vehicle 14. The controller 20 is generally configured to operate the host-vehicle 12 in accordance with a driving-rule 22. As used herein, the driving-rule 22 is distinguished from a traffic-law such as posted-speed limit as violating the driving-rule 22 does not imply that an infraction of traffic-laws has or will occur.

What constitutes the driving-rule 22 will become apparent in view of the several examples of the driving-rule 22 given below. It will also become apparent how strict adherence to the driving-rule 22 can sometimes result in reduced overall traffic efficiency, so in some situations it may be advantageous to violate or modify, possibly temporarily, the driving-rule 22 with the benefit being an increase in overall traffic efficiency. The decision to violate or modify the driving-rule 22 may be based on the detection of an observed-deviation 24 of the driving-rule 22 by the other-vehicle 14. That is, the modification of the driving-rule 22 may be based on the observed-deviation 24.

The operation of the host-vehicle 12 in accordance with the driving-rule 22 determines the behavior of the vehicle-operation 26 whether the host-vehicle 12 is being operated in an automated-mode, a manual-mode, or a partial blending of the automated-mode and the manual-mode. The driving-rule 22 is then influential as to how aggressively the vehicle-controls 28 are operated. The system 10 may also include a location-device 32 used to determine a location on a digital-map (not shown) so the system 10 can 'remember' locations where violation or modification of the driving-rule 22 occurs repeatedly.

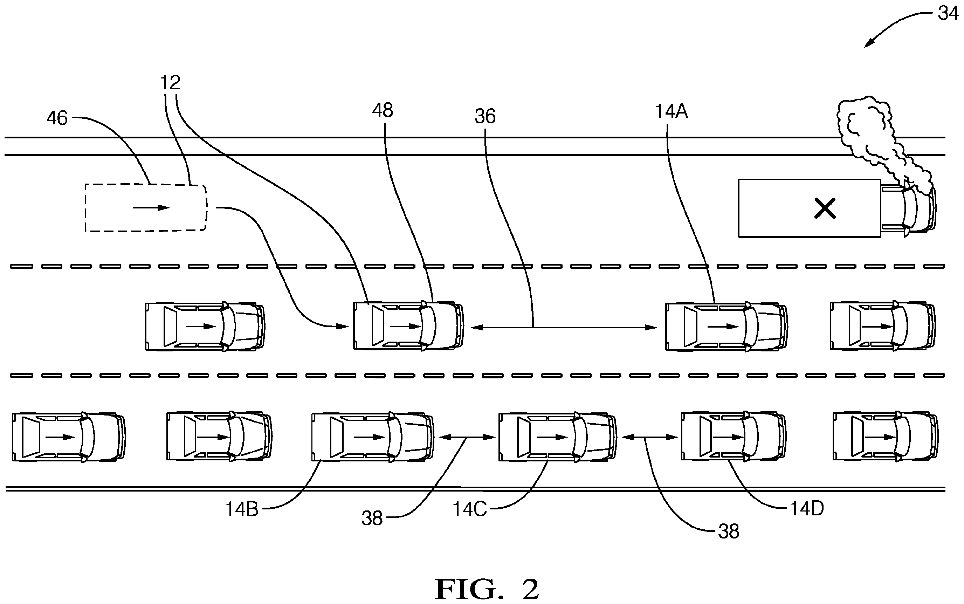

Fig. 2 illustrates a non-limiting example of a traffic-scenario 34. A non-limiting example of the driving-rule 22 may be a following-distance 36 that the host-vehicle 12 maintains or exceeds when following the other-vehicle 14A. The following-distance 36 may be a preprogrammed value stored in the controller 20. The observed-deviation 24 observed by the system 10 using the vehicle-detector 16 and/or the transceiver 18 may be a separation-distance 38 between other-vehicles 14B, 14C, 14D proximate to the host-vehicle 12 that is substantially different from the following-distance, e.g. less than 80% of the following-distance 36. If the system 10 observes that the typical value of the separation-distance 38 is substantially less than the stored value of the following-distance 36, the system 10 may modify the following-distance 36 based on the separation-distance 38. That is, the following-distance 36 may be decreased to, for example, an average of the observed value of the separation-distance 38 between the other-vehicles 14B, 14C, 14D. The modified value of the following-distance 36 may be temporarily or permanently maintained, or may only be used when the host-vehicle is traveling on the roadway illustrated in Fig. 2 as indicated by the location-device 32.

Continuing to refer to Figs. 1 and 2, the host-vehicle 12 may encounter a stalled-truck 40 stalled in the left-lane of the roadway. A non-limiting example of the driving-rule 22 may be passing-only-on-left 42. That is, the system 10 may be pre-programmed to only allow the host-vehicle 12 to only pass any other vehicle on the lefthand side of the other-vehicle. However, if the observed-deviation 24 is a passing-on-right 44 by, the other-vehicles 14A, 14D for example, then the driving-rule 22 may be temporarily modified to allow passing-on-right by the host-vehicle 12. As illustrated, the host-vehicle may change-lanes from a prior-location 46 to a current-location 48 in preparation to pass the stalled-truck 40 on the right-hand side of the stalled-truck 40. As before, this modification may be a temporary modification so the driving-rule 22 is reset to the passing-only-on-left 42 after a few minutes.

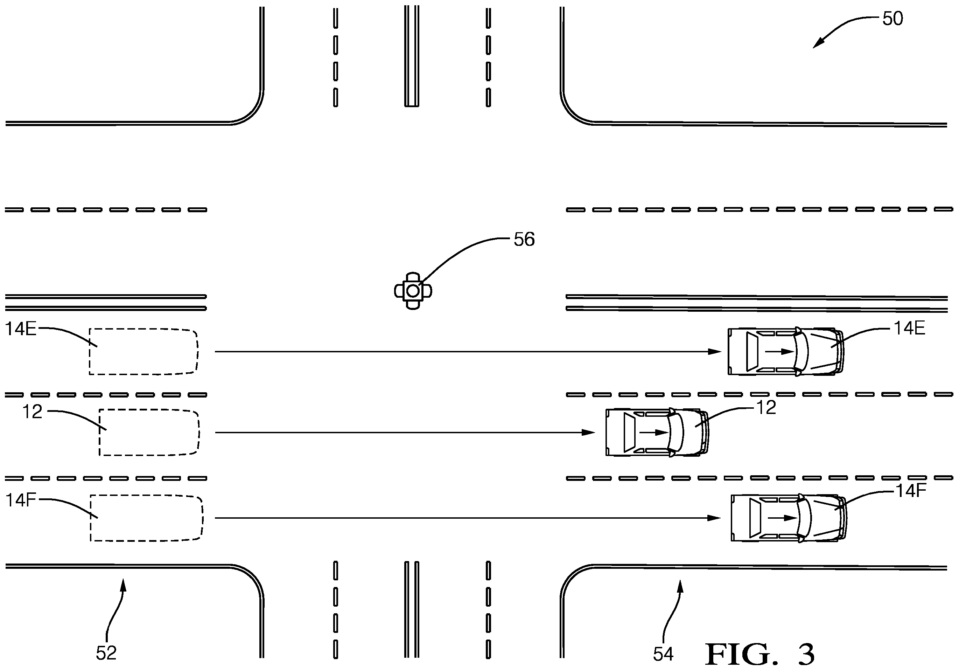

Fig. 3 illustrates another non-limiting example of a traffic-scenario 50 where the host-vehicle 12 and other-vehicles 14E, 14F are previously located at a prior-position 52 and are subsequently located at a current-position 54 after a traffic-signal 56 changes from red to green. The driving-rule 22 for the host-vehicle 12 may include an acceleration-rate 58 previously programmed into the controller 20. However, if the observed-deviation 24 is rapid-acceleration 60 by the other-vehicles 14E, 14F that is greater than the acceleration-rate 58 such that after reaching the current-position 54 the host-vehicle 12 is substantially behind the other-vehicles 14E and 14F, then the relatively slow acceleration by the host-vehicle 12 may unnecessarily impede following-vehicles (not shown) located behind the host-vehicle 12 and the other-vehicles 14E, 14F, possibly causing unnecessary lane-changes by the following-vehicles. Accordingly, the acceleration-rate 58 of the host-vehicle 12 may be increased to better correspond to the local driving habits exhibited by the other-vehicles 14E, 14F.

By way of further non-limiting examples, the driving-rule 22 may include a waiting-time (not shown) that the host-vehicle 12 waits at a yield-sign and/or a stop-sign before proceeding. The controller 20 may be configured to observe the waiting-time even if there are no other vehicles near the host-vehicle 12. For example, the controller 20 may be pre-programmed to wait for one second (Is) at a stop-sign before proceeding. However, if the other-vehicle 14 or other vehicles are observed (the observed-deviation 24) as waiting at stop signs for substantially more or less than the pre-programmed waiting-time, e.g. >1.5s or less than 0.5s, then the controller 20 may adjust the waiting time (the driving-rule 22).

By way of another non-limiting example, the driving-rule 22 may include a lateral-avoidance-distance (not shown) that the host-vehicle 12 maintains for clearance when passing a pedestrian or bicyclist (not shown) traveling on or near the edge of the roadway, two-meters (2m) for example. However, if the observed-deviation is that the other-vehicle 14 or other vehicles typically steer to provide three or more meters (>3m), then the controller 20 may modify the driving-rule 22 accordingly.

By way of another non-limiting example, the driving-rule 22 may include a steering-accuracy (not shown) that is a measure of how accurate the host-vehicle is steered to follow the center of the travel-lane. It has been observed that some human-operators tend to drive closer to the edge of the travel-lane when a roadway is curvy to allow for additional clearance for unseen until the last instant opposing traffic. If the controller 20 observes that the observed-deviation 24 is that most other vehicles are right-of- center rather than not centered, the controller 20 may adjust the driving-rule 22 accordingly.

Accordingly, a driving-rule system (the system 10), a controller 20 for the system 10 and a method of operating the system 10 is provided. While preprogramming of the driving-rule 22 may have been based on a desire for an exceptionally smooth or leisurely ride in the host-vehicle 12, local driving habits exhibited the other-vehicle 14 and/or the other-vehicles 14A, 14B, 14C, 14D, 14E, 14F may indicate that the driving-rule 22 be modified so the behavior of the host-vehicle 12 better corresponds with the local driving habits.

## Claims

1. A driving-rule system (10) suitable to operate an automated vehicle, said system (10) comprising:
a vehicle-detector (16) suitable for use on a host-vehicle (12), said vehicle-detector (16) used to detect movement of an other-vehicle (14) proximate to the host-vehicle (12); and
a controller (20) in communication with the vehicle-detector (16), **characterized in that** said controller (20) is configured to:
operate the host-vehicle (12) in accordance with a driving-rule (22),
detect an observed-deviation (24) of the driving-rule (22) by the other-vehicle (14), and
modify the driving-rule (22) based on the observed-deviation (24).

2. The system (10) in accordance with claim 1, wherein said controller (20) is further configured to operate the host-vehicle (12) in accordance with the modified driving-rule.

3. The system (10) in accordance with any one of claims 1 or 2, wherein the driving-rule (22) is modified by said controller (20) based on the observed-deviation (24) so that a driving behavior exhibited by the host-vehicle (20) in accordance with the modified driving-rule corresponds to a driving behavior exhibited by the other-vehicle (14) in accordance with the observed-deviation (24) from the driving-rule (22).

4. The system (10) in accordance with any one of claims 1 to 3, wherein
said vehicle-detector (16) is configured to detect movement of a plurality of other-vehicles (14, 14A, 14B, 14C, 14D, 14E, 14F) proximate to the host-vehicle (12); and
said controller (20) is further configured to:
detect a plurality of observed-deviations (24) of the driving-rule (22) by a plurality of other-vehicles (14, 14A, 14B, 14C, 14D, 14E, 14F),
determining an average observed-deviation from the plurality of observed-deviations (24), and
modify the driving-rule (22) based on the average observed-deviation.

5. The system (10) in accordance with any one of claims 1 to 4, wherein said controller (20) is configured to temporarily operate the host-vehicle (12) in accordance with the modified driving-rule and to reset the modified driving-rule to correspond to the driving-rule (22) after temporary operation of the host-vehicle (12) in accordance with the modified driving-rule.

6. The system (10) in accordance with any one of claims 1 to 5, wherein the driving-rule (22) is distinguished from a traffic-law in that a violation of the driving-rule (22) does not imply a current or future infraction of a traffic-law.

7. The system (10) in accordance with any one of claim 1 to 6, further comprising:
a location-device 32 used to determine a location on a digital-map, wherein said controller (20) is further configured to store locations where modification of the driving-rule (22) occurs frequently.

8. The system (10) in accordance with any one of claims 1 to 7, wherein the driving-rule (22) is a following-distance (36), the observed-deviation (24) is a separation-distance (38) between other-vehicles (14A) proximate to the host-vehicle (12) different from the following-distance (36), whereby the following-distance (36) is modified based on the separation-distance (38).

9. The system (10) in accordance with any one of claims 1 to 7, wherein the driving-rule (22) is passing-only-on-left (42), the observed-deviation (24) is a passing-on-right (44) by the other-vehicle (14), whereby passing-on-right (44) by the host-vehicle (12) is allowed.

10. The system (10) in accordance with any one of claims 1 to 7, wherein the driving-rule (22) is an acceleration-rate (58), the observed-deviation (24) is rapid-acceleration (60) by the other-vehicle (14) greater than the acceleration-rate (58), whereby the acceleration-rate (58) of the host-vehicle (12) is increased.

## Patentansprüche

1. Fahrregelsystem (10), geeignet zum Betreiben eines automatisierten Fahrzeugs, wobei das System (10) Folgendes umfasst:
einen Fahrzeugdetektor (16), geeignet zur Verwendung an einem Hostfahrzeug (12), wobei der Fahrzeugdetektor (16) verwendet wird, um Bewegung eines anderen Fahrzeugs (14) nahe dem Hostfahrzeug (12) zu detektieren; und
eine Steuerung (20) in Verbindung mit dem Fahrzeugdetektor (16), **dadurch gekennzeichnet, dass** die Steuerung (20) ausgelegt ist zum:
Betreiben des Hostfahrzeugs (12) in Übereinstimmung mit einer Fahrregel (22),
Detektieren einer beobachteten Abweichung (24) von der Fahrregel (22) durch das andere Fahrzeug (14), und
Modifizieren der Fahrregel (22) auf Basis der beobachteten Abweichung (24).

2. System (10) nach Anspruch 1, wobei die Steuerung (20) ferner ausgelegt ist zum Betreiben des Hostfahrzeugs (12) in Übereinstimmung mit der modifizierten Fahrregel.

3. System (10) nach einem der Ansprüche 1 oder 2, wobei die Fahrregel (22) durch die Steuerung (20) basierend auf der beobachteten Abweichung (24) modifiziert wird, sodass ein durch das Hostfahrzeug (20) gezeigtes Fahrverhalten in Übereinstimmung mit der modifizierten Fahrregel einem durch das andere Fahrzeug (14) gezeigten Fahrverhalten in Übereinstimmung mit der beobachteten Abweichung (24) von der Fahrregel (22) entspricht.

4. System (10) nach einem der Ansprüche 1 bis 3, wobei der Fahrzeugdetektor (16) ausgelegt ist zum Detektieren von Bewegung von mehreren anderen Fahrzeugen (14, 14A, 14B, 14C, 14D, 14E, 14F) nahe dem Hostfahrzeug (12); und wobei die Steuerung (20) ferner ausgelegt ist zum:
Detektieren von mehreren beobachteten Abweichungen (24) von der Fahrregel (22) durch mehrere andere Fahrzeuge (14, 14A, 14B, 14C, 14D, 14E, 14F),
Bestimmen einer durchschnittlichen beobachteten Abweichung von den mehreren beobachteten Abweichungen (24), und
Modifizieren der Fahrregel (22) auf Basis der durchschnittlichen beobachteten Abweichung.

5. System (10) nach einem der Ansprüche 1 bis 4, wobei die Steuerung (20) ausgelegt ist zum temporären Betreiben des Hostfahrzeugs (12) in Übereinstimmung mit der modifizierten Fahrregel und zum Zurücksetzen der modifizierten Fahrregel, um nach temporärem Betrieb des Hostfahrzeugs (12) in Übereinstimmung mit der modifizierten Fahrregel der Fahrregel (22) zu entsprechen.

6. System (10) nach einem der Ansprüche 1 bis 5, wobei die Fahrregel (22) dahingehend von einem Verkehrsgesetz unterschieden wird, dass eine Verletzung der Fahrregel (22) keinen aktuellen oder künftigen Verstoß eines Verkehrsgesetzes impliziert.

7. System (10) nach einem der Ansprüche 1 bis 6, das ferner Folgendes umfasst: eine Lokalisierungsvorrichtung (32), die verwendet wird, um einen Ort auf einer digitalen Karte zu bestimmen, wobei die Steuerung (20) ferner ausgelegt ist zum Speichern von Orten, an denen häufig eine Modifizierung der Fahrregel (22) auftritt.

8. System (10) nach einem der Ansprüche 1 bis 7, wobei die Fahrregel (22) ein Folgeabstand (36) ist, die beobachtete Abweichung (24) ein Trennabstand (38) zwischen anderen Fahrzeugen (14A) nahe dem Hostfahrzeug (12) ist, der verschieden vom Folgeabstand (36) ist, wobei der Folgeabstand (36) auf Basis des Trennabstands (38) modifiziert wird.

9. System (10) nach einem der Ansprüche 1 bis 7, wobei die Fahrregel (22) Vorbeifahren nur auf der linken Seite (42) ist, die beobachtete Abweichung (24) Vorbeifahren auf der rechten Seite (44) durch das andere Fahrzeug (14) ist, wobei Vorbeifahren auf der rechten Seite (44) durch das Hostfahrzeug (12) erlaubt ist.

10. System (10) nach einem der Ansprüche 1 bis 7, wobei die Fahrregel (22) eine Beschleunigungsrate (58) ist, die beobachtete Abweichung (24) eine schnelle Beschleunigung (60) durch das andere Fahrzeug (14) ist, die größer als die Beschleunigungsrate (58) ist, wodurch die Beschleunigungsrate (58) des Hostfahrzeugs (12) erhöht wird.

## Revendications

1. Système de règle de conduite (10) approprié pour faire fonctionner un véhicule automatisé, ledit système (10) comprenant :
un détecteur de véhicule (16) approprié pour l'utilisation sur un véhicule hôte (12), ledit détecteur de véhicule (16) étant utilisé pour détecter un mouvement d'un autre véhicule (14) à proximité du véhicule hôte (12) ; et
une unité de commande (20) en communication avec le détecteur de véhicule (16), **caractérisé en ce que** ladite unité de commande (20) est configurée pour :
faire fonctionner le véhicule hôte (12) conformément à une règle de conduite (22),
détecter un écart observé (24) de la règle de conduite (22) par l'autre véhicule (14), et
modifier la règle de conduite (22) sur la base de l'écart observé (24).

2. Système (10) selon la revendication 1, dans lequel ladite unité de commande (20) est en outre configurée pour faire fonctionner le véhicule hôte (12) selon la règle de conduite modifiée.

3. Système (10) selon l'une quelconque des revendications 1 ou 2, dans lequel la règle de conduite (22) est modifiée par ladite unité de commande (20) sur la base de l'écart observé (24) pour qu'un comportement de conduite présenté par le véhicule hôte (20) selon la règle de conduite modifiée corresponde à un comportement de conduite présenté par l'autre véhicule (14) selon l'écart observé (24) à partir de la règle de conduite (22).

4. Système (10) selon l'une quelconque des revendications 1 à 3, dans lequel ledit détecteur de véhicule (16) est configuré pour détecter un mouvement d'une pluralité d'autres véhicules (14, 14A, 14B, 14C, 14D, 14E, 14F) à proximité du véhicule hôte (12) ; et ladite unité de commande (20) est en outre configurée pour :
détecter une pluralité d'écarts observés (24) de la règle de conduite (22) par une pluralité d'autres véhicules (14, 14A, 14B, 14C, 14D, 14E, 14F),
déterminer un écart observé moyen à partir de la pluralité d'écarts observés (24), et
modifier la règle de conduite (22) sur la base de l'écart observé moyen.

5. Système (10) selon l'une quelconque des revendications 1 à 4, dans lequel ladite unité de commande (20) est configurée pour temporairement faire fonctionner le véhicule hôte (12) selon la règle de conduite modifiée et pour réinitialiser la règle de conduite modifiée pour correspondre à la règle de conduite (22) après le fonctionnement temporaire du véhicule hôte (12) selon la règle de conduite modifiée.

6. Système (10) selon l'une quelconque des revendications 1 à 5, dans lequel la règle de conduite (22) est distinguée d'une loi de circulation en ce qu'une violation de la règle de conduite (22) d'implique pas d'infraction actuelle ou future d'une loi de circulation.

7. Système (10) selon l'une quelconque des revendications 1 à 6, comprenant en outre :
un dispositif de localisation (32) utilisé pour déterminer une localisation sur une carte numérique, dans lequel ladite unité de commande (20) est en outre configurée pour stocker des localisations où une modification de la règle de conduite (22) se produit fréquemment.

8. Système (10) selon l'une quelconque des revendications 1 à 7, dans lequel la règle de conduite (22) est une distance de suivi (36), l'écart observé (24) est une distance de séparation (38) entre d'autres véhicules (14A) à proximité du véhicule hôte (12) différente de la distance de suivi (36), moyennant quoi la distance de suivi (36) est modifiée sur la base de la distance de séparation (38).

9. Système (10) selon l'une quelconque des revendications 1 à 7, dans lequel la règle de conduite (22) est un dépassement seulement sur la gauche (42), l'écart observé (24) est un dépassement sur la droite (44) par l'autre véhicule (14), moyennant quoi le dépassement sur la droite (44) par le véhicule hôte (12) est permis.

10. Système (10) selon l'une quelconque des revendications 1 à 7, dans lequel la règle de conduite (22) est un taux d'accélération (58), l'écart observé (24) est une accélération (60) par l'autre véhicule (14) supérieure au taux d'accélération (58), moyennant quoi le taux d'accélération (58) du véhicule hôte (12) est augmenté.
